Europäisches Patentamt

European Patent Office

Office européen des brevets

(19)

(11) Veröffentlichungsnummer : **0 548 642 B1**

(12) **EUROPÄISCHE PATENTSCHRIFT**

(45) Veröffentlichungstag der Patentschrift :
26.07.95 Patentblatt 95/30

(51) Int. Cl.⁶ : **G11B 5/706**

(21) Anmeldenummer : **92120786.6**

(22) Anmeldetag : **05.12.92**

(54) **Magnetischer Aufzeichnungsträger.**

(30) Priorität : **20.12.91 DE 4142166**

(43) Veröffentlichungstag der Anmeldung :
**30.06.93 Patentblatt 93/26**

(45) Bekanntmachung des Hinweises auf die
Patenterteilung :
**26.07.95 Patentblatt 95/30**

(84) Benannte Vertragsstaaten :
**DE FR GB NL**

(56) Entgegenhaltungen :
**EP-A- 0 368 093**

(73) Patentinhaber : **BASF Magnetics GmbH**
**Dynamostrasse 3**
**D-68165 Mannheim (DE)**

(72) Erfinder : **Jachow, Harald, Dr.**
**Valckenbergstrasse 32**
**W-6520 Worms 1 (DE)**
Erfinder : **Schwab, Ekkehard, Dr.**
**Berwartsteinstrasse 4**
**W-6730 Neustadt (DE)**

Erfinder : **Koerner, Reinhard, Dr.**
**Am Graben 20**
**W-6444 Wildeck (DE)**
Erfinder : **Mueller, Norbert, Dr.**
**Maximilianstrasse 23**
**W-6701 Friedelsheim (DE)**
Erfinder : **Lehnert, Rudi, Dr.**
**Goeteborger Weg 23**
**W-6700 Ludwigshafen (DE)**
Erfinder : **Ohlinger, Manfred, Dr.**
**Anselm-Feuerbach-Strasse 13**
**W-6719 Frankenthal (DE)**
Erfinder : **Auweter, Helmut, Dr.**
**Lessingstrasse 35**
**W-6703 Limburgerhof (DE)**
Erfinder : **Jakusch, Helmut, Dr.**
**Lorscher Ring 6c**
**W-6710 Frankenthal (DE)**
Erfinder : **Veitch, Ronald John, Dr.**
**Carl-Schumann-Ring 18**
**W-6701 Maxdorf (DE)**
Erfinder : **Bobrich, Michael, Dr.**
**In den Muehlgaerten 3**
**W-6737 Boehl-Iggelheim (DE)**

(74) Vertreter : **Langfinger, Klaus-Dieter, Dr. et al**
**BASF Aktiengesellschaft,**
**Patentabteilung ZDX - C 6**
**D-67056 Ludwigshafen (DE)**

EP 0 548 642 B1

## Beschreibung

Die Erfindung betrifft einen magnetischen Aufzeichnungsträger, umfassend ein nichtmagnetisches Trägermaterial und mindestens eine darauf aufgebrachte Magnetschicht, enthaltend ein in einem polymeren Bindemittel und Zusatzstoffen gleichmäßig verteiltes nadelförmiges Chromdioxid mit einer Koerzitivfeldstärke von mindestens 60 kA/m, einer geringen Teilchengröße und einer engen Teilchengrößenverteilung sowie ein Verfahren zur Herstellung dieses Chromdioxids.

Nadelförmiges Chromdioxid, seine Herstellung sowie die Verwendung dieses Materials für magnetische Aufzeichnungsträger ist vielfach beschrieben. Magnetische Aufzeichnungsträger, die Chromdioxid enthalten, zeigen im allgemeinen gegenüber Aufzeichnungsträgern auf Basis anderer magnetischer Oxide überlegene magnetische Eigenschaften, welche auf die hohen Werte bei der Koerzitivfeldstärke, der spezifischen remanenten Magnetisierung und Sättigungsmagnetisierung sowie insbesondere auf die einheitliche Form und die geringen Abmessungen der nadelförmigen Chromdioxid-Teilchen zurückzuführen sind.

Die inzwischen weiter fortschreitende Entwicklung bei der Verarbeitung von analogen und insbesondere digitalen Audio- und Videosignalen macht für deren Speicherung auch entsprechend angepaßte magnetische Aufzeichnungsträger notwendig. Ein wesentliches Merkmal muß dabei die Erhöhung der Speicherdichte sein. Im Falle von magnetischen Aufzeichnungsträgern, welche magnetisierbare Teilchen, wie das Chromdioxid, in der Bindemittelmatrix der Magnetschicht enthalten, bedeutet dies, daß neben der Verringerung der Schichtdicke eine Erhöhung der Koerzitivfeldstärke der Magnetteilchen sowie eine Verringerung ihrer Teilchengröße notwendig wird. Bei einer geringeren Dicke der Magnetschicht muß aber in gleichem Maße das magnetische Moment der Teilchen erhöht werden, damit der für den Aufzeichnungspegel maßgebliche remanente Fluß der Magnetschichteinheit erhalten bleibt.

Es hat daher nicht an Versuchen gefehlt, die Entwicklung von Chromdioxidmaterialien in Richtung höherer Koerzitivfeldstärke, höherer Sättigungsmagnetisierung und gleichzeitig engerer Teilchengrößenverteilung voranzutreiben. Die Herstellung von Chromdioxid erfolgt üblicherweise nach zwei Verfahren. Neben der Synthese des Chromdioxids durch eine unter hydrothermalen Bedingungen ablaufenden Synproportionierung von Chrom(III)- und Chrom(VI)oxiden, wie beispielsweise in der EP-A 27 640 beschrieben, ist noch die Herstellung durch thermische Zersetzung von hydratisiertem Chrom(III)chromat bekannt. So wird in der DE-A 22 10 059 ein Verfahren beschrieben, bei dem $Cr_2(CrO_4)_3 \cdot nH_2O$, worin n 1 bis 8 bedeutet, bei Temperaturen zwischen 250 und 500°C und unter Drücken zwischen 30 und 1000 bar zum Chromdioxid zersetzt wird. Das dabei entstehende Produkt weist eine für die inzwischen üblichen Aufzeichnungsmedien zu geringe Koerzitivfeldstärke auf, welche bei den höheren Werten für n sogar noch weiter abfällt. Für den Fall, daß die Werte für n größer als 8 sind, verringert sich durch das dann gleichzeitig entstehende CrOOH auch noch die remanente Magnetisierung und die Sättigungsmagnetisierung. Eine Verbesserung der magnetischen Eigenschaft läßt sich mit einem Verfahren gemäß der DE-A 23 32 854 erreichen, bei dem eine unter den gegebenen Reaktionsbedingungen sich exotherm zersetzende Substanz dem Chrom(III)chromat beigemischt wird. Auch die Modifizierung des Chromdioxids mit Lanthan, Yttrium, Barium oder Strontium soll, wie in der DE-A 29 19 572 angegeben, eine Anhebung der magnetischen Kenndaten bewirken. Des weiteren läßt sich modifiziertes Chromdioxid ebenfalls aus Chrom(III)chromaten mit einem höheren Wassergehalt (Hydratationsgrad n 8 bis 12) herstellen (DE-B 25 20 030 und DE-B 26 48 305).

Gemeinsames Merkmal der Prozesse zur Darstellung von Chromdioxid aus Chrom(III)chromat ist der Einsatz einer möglichst geringen Wassermenge, um einen Verlust an Sättigungsmagnetisierung durch eine CrOOH-Bildung zu vermeiden. Weiterhin ist die Herstellung der in diesen Prozessen eingesetzten Chrom(III)chromate ein sehr zeitaufwendiger und vielstufiger Prozeß und damit nicht wirtschaftlich. Zudem liegen die Chrom(III)chromate mit niedrigem Hydratisierungsgrad in Pulverform vor, wodurch teure Sicherheitseinrichtungen, wie Filter und gekapselte Apparaturen, erforderlich werden. Bei höheren Hydratisierungsgraden liegen hochviskose, schwer handhabbare, d.h. nicht fließfähige Pasten vor. Eine Weiterentwicklung der Chromdioxid-Herstellung aus Chrom(III)chromat wird in der EP-A 0 304 851 und der USA 5 030 371 beschrieben. So wird mit deutlich geringerem zeitlichen und apparativen Aufwand $Cr_2(CrO_4)_3 \times nH_2O$ mit $n \cong 13$ durch Reduktion einer wäßrigen $CrO_3$-Suspension mit organischen Verbindungen, wie z.B. Glycerin, Methanol oder Glycol, hergestellt, wobei der potentielle Wassergehalt des Reduktionsmittels berücksichtigt ist, und bei 200 bis 500°C unter einem Druck von 50 bis 700 bar zu Chromdioxid umgesetzt wird. Das gemäß US-A 5 030 371 erhaltene Produkt, ein mit Eisen und Tellur bzw. Antimon modifiziertes $CrO_2$, zeichnet sich zwar durch eine hohe spezifische Sättigungsmagnetisierung und eine Koerzitivfeldstärke von über 60 kA/m aus, ist aber wegen verfahrenstechnischer Mängel, starkem Schäumen während der Zugabe des Glycerins und sehr hoher Viskosität der Chrom(III)chromatmasse, nur sehr schwer in größeren Mengen mit gleichenmäßigen Eigenschaften zu erhalten. Den Nachteil der hohen Viskosität durch Einsatz von organischen Reduktionsmitteln, die bei der Herstellung des Reaktionsgemisches nur partiell mit $CrO_3$ reagieren, zu umgehen, wird in der EP-A 239 089 beschrieben. Ein Teil der exothermen Reduktion des $CrO_3$ erfolgt dann während der Umsetzung im Reaktor, wobei ein erheblicher Teil der notwendigen Heizenergie vom chemischen System selbst erbracht wird ("heat-kick") und eine gleichförmige Wärmeverteilung im Reaktionsgemisch möglich wird. Dies hat jedoch den Nachteil, daß im Bereich der Keimbildung aufgrund einer unkontrollierbaren Temperaturführung die Teilchengrößenverteilung des resultierenden Materials ungünstig beeinflußt wird. Nachteilig ist auch, daß die resultierenden magnetischen Pulvern Koerzitivfeldstärken von unter 53 kA/m aufweisen.

Diese nach dem Stand der Technik erhältlichen Chromdioxidmaterialien eignen sich zwar zur Herstellung von hochwertigen, für die derzeit allgemein üblichen Verwendungszwecke geeigneten, magnetischen Aufzeichnungsträger, sie weisen jedoch für die zukünftigen hochdichten Aufzeichnungs- und Speicherverfahren Schwächen auf. Magnetische Aufzeichnungsträger, welche imstande sind, auch diesen Anforderungen zu genügen, müssen bei gleichbleibend hohem remanenten Fluß der Magnetschicht auch eine hohe Koerzitivfeldstärke der Schicht von mehr als 60 kA/m aufweisen und bei einer engen Teilchengrößenverteilung der in der Schicht eingearbeiteten magnetischen nadelförmigen Materialien gleichzeitig eine im Hinblick auf die angestrebte hohe Informationsdichte pro Speicherfläche notwendige geringe mittlere Teilchenlänge zeigen.

Aufgabe der Erfindung war es somit, magnetische, in der Aufzeichnungsschicht Chromdioxid als magnetisierbares Material enthaltende Aufzeichnungsträger bereit zustellen, welche die genannten Forderungen hinsichtlich der Verwendbarkeit zur Speicherung hoher Informationsdichten erfüllen.

Gegenstand der Erfindung sind somit magnetische Aufzeichnungsträger, umfassend ein nichtmagnetisches Trägermaterial und mindestens eine darauf aufgebrachte Magnetschicht, enthaltend ein in einem polymeren Bindemittel und Zusatzstoffen gleichmäßig verteiltes nadelförmiges Chromdioxid mit einer Koerzitivfeldstärke von mindestens 60 kA/m, die sich dadurch auszeichnen, daß die mittlere Teilchenlänge des Chromdioxids weniger als 300 nm beträgt und der Faktor HD gemäß der Formel

$$HD = \frac{KT \cdot L}{100 \cdot \Delta L}$$

in der KT die Koerzitivfeldstärke der Magnetschicht in [kA/m], gemessen in einem äußeren Feld von 380 kA/m, L die mittlere Teilchenlänge und $\Delta L$ der Bereich der Teilchengrößenverteilung, bestimmt aus der Anzahl-Verteilung der Teilchenlänge, beides gemessen in [nm], bedeuten, größer 1,85 ist, vorzugsweise 1,85 bis 4,0, ist.

Weiterhin ist Gegenstand der Erfindung ein Verfahren zur Herstellung eines für den erfindungsgemäßen magnetischen Aufzeichnungsträger geeigneten, mit Eisen und Tellur und/oder Antimon modifizierten Chromdioxids mit einer Koerzitivfeldstärke von größer 60 kA/m, einer Sättigungsmagnetisierung von größer 85 $nTm^3/g$ und einer engen Teilchengrößenverteilung bei einer mittleren Teilchenlänge von weniger als 300 nm durch Umsetzung einer wäßrigen $CrO_3$-Suspension, versetzt mit 0,05 bis 10 Gew.-% Eisenoxid und Telluroxid und/oder einer Antimonverbindung, bezogen auf Chromdioxid, und organischen Reduktionsmitteln zur Einstellung eines Cr (VI) : Cr(III)-Verhältnisses von 2 : 1 bis 1 : 1, wobei unter Berücksichtigung der bei der Oxidation der organischen Reduktionsmittel entstehenden Wassermenge 1,54 bis 2,32 Gewichtsteile $CrO_3$ auf 1 Teil Wasser eingesetzt werden, bei Temperaturen von 250 bis 400°C unter einem Druck von mindestens 70 bar, bei dem als organisches Reduktionsmittel Glycerin und Octanol eingesetzt wird, wobei der Anteil des Glycerins am gesamten Reduktionsäquivalent 25 bis 70 % beträgt.

Als Reduktionsäquivalent wird die Menge an Reduktionsmittel bezeichnet, die zur Einstellung eines Cr(III)/Cr(VI)-Verhältnisses durch anteilige Reduktion von $CrO_3$ benötigt wird. Dabei werden die Reduktionsmittel Glycerin und Octanol im Verlauf der $CrO_2$-Synthese im wesentlichen zu $CO_2$ und Wasser oxidiert.

In einer Ausgestaltung des erfindungsgemäßen Verfahrens wird bei dem in einem Reaktor stattfindenden Prozeß der Herstellung des Chromdioxids so geführt, daß während der Aufheizphase die Temperatur ein bis zwei Stunden lang bei einem Wert von etwa 130°C gehalten wird. Außerdem hat es sich als im Rahmen der Erfindung besonders vorteilhaft herausgestellt, die Erwärmung des Reaktors von 200 auf 300°C innerhalb einer kurzen Zeitspanne von vorzugsweise nicht mehr als 60 Minuten durchzuführen.

Bei der Durchführung des erfindungsgemäßen Verfahrens wird zu einem Gemisch aus $CrO_3$ und Wasser eine wäßriger Glycerin-Lösung und Octanol getropft. Hierbei findet eine exotherme Reaktion statt, bei der das Glycerin vollständig und das Octanol zum Teil durch $CrO_3$ oxidiert werden. Auf diese Weise wird der Anteil an nicht abreagiertem Octanol, oder Produkte der Teiloxidation, und damit der "heat-kick" während der Umsetzung im Reaktor gezielt minimiert, wobei die Bedingung für eine gut fließfähige Reaktionsmischung in handhabbarer Form erfüllt wird. Für die wäßrige $CrO_3$-Suspension, mit einem gelösten Anteil an $CrO_3$, werden so viele Gewichtsteile $CrO_3$ pro Teil Wasser eingesetzt, daß unter Berücksichtigung der sich bei der Glycerin- und vollständigen Octanol-Oxidation bildenden Wassermenge und der Wassermenge in der Glycerin-Lösung, insgesamt ein Gewichtsverhältnis von 1,54 bis 2,32 Teile $CrO_3$ zu 1 Teil Wasser resultiert. Zur besseren Kontrolle der sehr heftigen Reaktion von Glycerin und $CrO_3$ ist eine wäßrige Verdünnung des Glycerins notwendig. Üblicherweise wird Glycerin mit Wasser in einem Gewichtsverhältnis von 1 zu 4,5 bis 1 zu 1,5 bei konzentrierten Reaktionsmischungen verdünnt. Die Menge an Glycerin und Octanol ist so bemessen, daß 33,3 bis 50,0 %

der Gesamtmenge an $CrO_3$, vorzugsweise 40 %, von Chrom(VI) zu Chrom(III) reduziert werden.

Vor dem Beginn des Zutropfens des Octanols und Glycerins wird die wäßrige $CrO_3$-Suspension zusammen mit den Dotierungsmitteln in einer geeigneten Apparatur intensiv gerührt und dabei auf 50 bis 70°C erwärmt. Als Rührer wird beispielsweise ein Dissolver eingesetzt. Als Modifizierungsmittel werden Eisen und Tellur und-/oder Antimon und/oder ihre Verbindungen verwendet. Die Modifizierungsmittel werden in Mengen von 0,05 bis 10,0 Gew.-%, bezogen auf die $CrO_2$-Menge eingesetzt und werden vor Beginn der Zugabe der organischen Reduktionsmittel zu der wäßrigen $CrO_3$-Suspension zugegeben. Zu der 50 bis 70°C warmen Mischung wird dann bei gleichzeitiger Kühlung die wäßrige Glycerin-Lösung und Octanol derart zugetropft, daß die Mischungstemperatur im genannten Temperaturbereich bleibt. Für die einfache, schnelle und nicht von Schäumprozessen begleitete Durchführung der Herstellung des Reaktionsgemisches wird bei der Zugabe der organischen Reduktionsmittel mit Glycerin begonnen. Das vollständige Abreagieren des Glycerins bewirkt einen kontinuierlichen Anstieg der Viskosität des Reaktionsgemisches. Der zeitpunkt der Schaumbildung setzt dabei umso früher ein, je weniger Wasser zur $CrO_2$-Herstellung eingesetzt wird. Der Schaumprozeß ist durch einen bei hohen Viskositäten gehinderten $CO_2$-Austrag, das Oxidationsprodukt aus Glycerin, begründet.

Bei der erfindungsgemäßen Ausgestaltung des Verfahrens wird bei einer Reduktion von 40 % der eingesetzten $CrO_3$-Menge und einem Gewichtsverhältnis von 2,32 Teilen $CrO_3$ auf 1 Teil Wasser, unter Berücksichtigung der bei einer vollständigen Reaktion sich bildenden Wassermenge, 25 % des Reduktionsäquivalents durch Glycerin aufgebracht. Der Glycerin-Anteil wird bei Änderung des Gewichtsverhältnisses zugunsten von Wasser kontinuierlich erhöht und beträgt 70 % bei einem Gewichtsverhältnis von 1,54 Teilen $CrO_3$ zu 1 Teil Wasser. Die anschließende Zugabe von Octanol ist in allen Fällen problemlos, da aufgrund der dann nicht vollständigen Reaktion mit $CrO_3$ die Viskosität nur im geringen Maße zunimmt. Bei Gewichtsverhältnissen von 1,98 Teilen $CrO_3$ auf 1 Teil Wasser und größeren Verhältnissen lassen sich Octanol und Glycerin auch gleichzeitig zugeben.

Die nach der erfindungsgemäßen Vorgehensweise erhaltene, fließfähige Reaktionsmischung wird in stählernen Reaktionskannen gefüllt und in einem Hochdruckreaktor bei mindestens 70 bar und 250 bis 400°C zu Chromdioxid umgesetzt. Während der Aufheizphase des Reaktors wird die vorgegebene Temperatur bei 130°C für 1 bis 2 Stunden konstant gehalten, um durch verringerte Zufuhr von Heizenergie den bei dieser Temperatur noch zu einem geringen Maße stattfindenden heat-kick vollständig zu unterbinden. Weiterhin muß der Temperatur-Bereich von 200 bis 300°C möglichst schnell, d.h. in einer kurzen Zeitspanne von vorzugsweise nicht mehr als einer Stunde, durchfahren werden. Um dieses geforderte Temperaturprofil auch im Reaktionsgemisch in gleichförmiger Art und Weise zu realisieren, kann es vorteilhaft sein, Ringspaltkannen (gemäß US-A 4 045 544) mit Schichtdicken von weniger als 10 cm, vorzugsweise 5 cm, einzusetzen. Anschließend wird in bekannter Weise nach Erreichen der Maximaltemperatur innerhalb von höchstens zwei Stunden, vorzugsweise sofort, auf eine Temperatur zwischen 220 und 250°C abgekühlt und gleichzeitig entspannt. Das resultierende Chromdioxid wird mechanisch aus den Reaktionsgefäßen entfernt und gemahlen. Üblicherweise schließt sich dann eine thermische Behandlung bei 150 bis 400°C unter oxidierenden Bedingungen sowie eine Stabilisierung durch eine alkalische und/oder reduktive Oberflächenbehandlung des Chromdioxids an.

Das erfindungsgemäß hergestellte Chromdioxid weist eine Koerzitivfeldstärke von mindestens 60 kA/m und eine spezifische Sättigungsmagnetisierung von mehr als 85 $nTm^3/g$, gemessen in einem magnetischen Feld von 380 kA/m auf. Eine weitere vorteilhafte Eigenschaft ist der sehr enge Bereich der Teilchengrößenverteilung, dessen mittlere Abweichung weniger als 35 % der mittleren Teilchenlänge beträgt, wobei diese mittlere Teilchenlänge weniger als 300 nm ist.

Damit eignet sich dieses Chromdioxidmaterial in besonders vorteilhafter Weise für den Einsatz bei solchen neuartigen magnetischen Aufzeichnungsträgern, welche für die Aufzeichnung besonders hoher Informationsdichten vorgesehen sind. Die Verarbeitung des erfindungsgemäßen Chromdioxids zu magnetischen Aufzeichnungsträgern erfolgt nach bekannten Methoden. Für die Herstellung der Magnetschicht werden 2 bis 10 Gew.-Teile Chromdioxid zusammen mit dem Bindemittel und den geeigneten Dispergierhilfsmitteln, Gleitmitteln und weiteren üblichen Zusatzstoffen in einer Gesamtmenge bis zu 10 Gew.-% des Chromdioxids zu einer Dispersion verarbeitet. Die so erhaltene Dispersion wird filtriert und mit einer üblichen Beschichtungsmaschine, z.B. mittels eines Linealgießers, auf den unmagnetischen Träger in einer oder mehreren dünnen Schichten oder auf einen mit einer anderen Magnetschicht bereits versehenen Magnetogrammträger in dünner Schicht aufgetragen. Vor Trocknung der flüssigen Beschichtungsmischung bei Temperaturen zwischen 50 und 90°C wird gegebenenfalls eine magnetische Ausrichtung der Chromdioxidteilchen vorgenommen. Für eine spezielle Oberflächenvergütung der Magnetschicht werden die beschichteten Folienbahnen zwischen geheizten, polierten Walzen unter Druck hindurchgeführt. Danach betragen die Dicken der Magnetschichten üblicherweise zwischen 1,5 und 12 μm.

Als Bindemittel für die Magnetschichten werden die bekannten Polymerbindemittel verwendet, wie Acrylat-Copolymere, Polyvinylacetate, wie Polyvinylformal oder Polyvinylbutyral, höhermolekulare Epoxidharze,

4

Polyurethane und Gemische dieser und ähnlicher Bindemittel. Als vorteilhaft haben sich die in einem flüchtigen organischen Lösungsmittel löslichen elastomeren und praktisch isocyanatgruppenfreien linearen Polyesterurethane erwiesen, wie sie durch Umsetzung eines Polyesters aus einer aliphatischen Dicarbonsäure mit 4 bis 6 C-Atomen, wie 1,2- und 1,3-Propylenglykol, 1,4-Butandiol, Diethylenglykol, Neopentylglykol oder 1,8-Octandiol, mit einem Diisocyanat mit 6 bis 24 und insbesondere 8 bis 20 C-Atomen, wie Toluylendiisocyanat oder 4,4'-Diisocyanatodiphenylmethan, bevorzugt in Gegenwart einer kleineren Menge eines Glykols mit 4 bis 10 C-Atomen, wie 1,4-Butandiol, das eine Kettenverlängerung bewirkt, hergestellt werden können. Bevorzugt sind solche Polyesterurethane aus Adipinsäure, 1,4-Butandiol und 4,4'-Diisocyanatodiphenylmethan. Bevorzugte Polyesterurethane haben eine Shore-Härte A von 70 bis 100, eine Reißfestigkeit von 40 bis 42 N/mm² (nach DIN 53 455) und eine Reißdehnung (nach DIN 53 455) von etwa 440 bis 560 %. Der K-Wert nach H. Fikentscher (Cellulose-Chemie 13 (1932), Seite 58ff) liegt für die besonders geeigneten Polymerbindemittel zwischen 40 und 60 (1 %ig in DMF).

Die Erfindung sei anhand folgender Beispiele im Vergleich zu solchen nach dem Stand der Technik näher erläutert.

Dabei wurden an dem resultierenden Chromdioxid die spezifische Oberfläche SSA in [m²/g] gemäß DIN 66 132 mittels eines Ströhlein-Areameters der Firma Ströhlein, Düsseldorf, nach dem Einpunkt-Differenzverfahren nach Haul und Dümbgen sowie die magnetischen Eigenschaften mittels eines Schwingmagnetometers in einem Meßfeld von 380 kA/m bestimmt, und zwar die Koerzitivfeldstärke $H_c$ in [kA/m] und die Sättigungsmagnetisierung $M_s/\zeta$ in [n/Tm³/g]. Dabei betrug die mittleren Stopfdichte $\zeta$ = 1,3 g/cm³.

Die Angabe der Gewichtsprozente Dotierungsmittel in den Beispielen bezieht sich jeweils auf die Menge des resultierenden Chromdioxids.

Die mittlere Nadellänge des Chromdioxids mit Standardabweichung wird aus der Anzahlverteilung der Länge von mehr als 200 Teilchen auf einer TEM-Aufnahme (50.000fache Vergrößerung) bestimmt. Die Meßergebnisse sind in der Tabelle angegeben.

Beispiel 1

In einem 20 l-Rührgefäß werden 10 kg $CrO_3$ mit 3,4 kg Wasser, 17,7 g $TeO_2$ (= 0,21 Gew.-%) und 422 g $Fe_2O_3$ (= 5,0 Gew.-%) versetzt und 30 min. mit Hilfe eines Dissolvers dispergiert. Während des Dispergierens wird die Reaktionsmischung bei 50°C zuerst mit 226 g Glycerin (86,5 %ig) in 800 g Wasser und dann bei 65 bis 70°C mit 242 g 1-Octanol versetzt (Reduktionsverhältnis: 25 % Glycerin/75 % Octanol). Nach weiteren 2 h Nachrühren bei 70°C wird auf 30°C abgekühlt und die Reaktionsmischung in 10 l-Ringspaltkannen mit 5 cm Schichtdicke gefüllt.

Die gefüllten Reaktorkannen werden in einem Hochdruckreaktor auf 345°C bei 360 bar aufgeheizt, wobei bei 130°C die Temperatur für 1,5 h konstant gehalten wird und der Temperaturbereich von 200 bis 300°C innerhalb von 1 h durchfahren wird.

Von 345 bis 325°C wird in 2,5 h abgekühlt. Danach wird die Heizung augeschaltet und entspannt. Nach Abkühlen auf Raumtemperatur wird das entstandene $CrO_2$ mechanisch aus den Reaktionskannen entfernt, getrocknet und gemahlen. Die Meßergebnisse sind in der Tabelle angegeben.

Vergleichsversuch 1

Es wird wie in Beispiel 1 beschrieben verfahren, jedoch wurde das $CrO_3$ in 4,3 kg Wasser suspendiert und als Reduktionsmittel 325 g Octanol zugesetzt. Die Meßergebnisse sind in der Tabelle angegeben.

Beispiel 2

In einem 400 l-Reaktionsgefäß werden 350 kg $CrO_3$ mit 128 l Wasser, 14,7 kg $Fe_2O_3$ (= 5,0 Gew.-%) und 529 g $TeO_2$ (= 0,18 Gew.-%) versetzt und mit Hilfe zweier Dissolver 20 min. dispergiert. Die Suspension erwärmt sich dabei auf 55°C. Zu diesem Gemisch wird unter Kühlung innerhalb von 50 min. zuerst 12,76 kg Glycerin (86,5 %ig) in 30,0 kg Wasser und dann 68,4 kg 1-Octanol innerhalb von 80 min. derart gepumpt, daß die Temperatur der Reaktionsmischung 60 bis 70°C beträgt. Die Octanol-Zugabe erfolgt bereits nach 10 min. Glycerin-Zugabezeit gleichzeitig mit Glycerin, so daß eine Gesamt-Zugabezeit von 90 min. resultiert.

Das in der beschriebenen Weise erhaltene Reaktionsgemisch wird nach einer Nachrührzeit von 30 min. bei 55°C in Ringspaltkannen mit 5 cm Schichtdicke gefüllt, in einem Hochdruckreaktor auf 360°C bei 360 bar aufgehezit und innerhalb von 3 h auf 340°C abgekühlt. Danach wird innerhalb von 3 h auf Raumtemperatur gekühlt und beim Abkühlen nach 15 min. entspannt. Der Heizkurvenverlauf ist dadurch gekennzeichnet, daß bei 130°C diese Temperatur für 2 h konstant gehalten wird und der Temperaturbereich zwischen 200 und 300°C

EP 0 548 642 B1

innerhalb von 1 h durchfahren wird.

Das entstandene $CrO_2$ wird mechanisch aus den Reaktionskannen entfernt, gemahlen und getrocknet. Die Meßergebnisse sind in der Tabelle angegeben.

Beispiel 3

Es wird wie in Beispiel 2 beschrieben verfahren, jedoch wird das Reaktionsgemisch in Ringspaltkannen mit 10 cm Schichtdicke gefüllt. Die Meßergebnisse sind in der Tabelle angegeben.

Beispiel 4

In einem Reaktionsgefäß mit einem Volumen von 2 l werden 500 g $CrO_3$ mit 155,5 g Wasser versetzt und mit Hilfe eines Dissolvers 10 min. dispergiert. Danach werden 21 g $Fe_2O_3$ (= 5,0 Gew.-%, bezogen auf theoretische Ausbeute $CrO_2$) und 0,63 g $TeO_2$ (0,15 Gew.-%) zur Suspension gegeben. Während weiterer 20 min. Rührzeit wird die Mischung bei 60°C mit 15,8 g Glyzerin und 9,76 g 1-Octanol versetzt.

Das in der beschriebenen Weise erhaltene Reaktionsgemisch wird nach dem Abkühlen in stählerne Reaktionsgefäße mit 5 cm Durchmesser in einem Hochdruckreaktor auf 350°C bei 320 bar aufgeheizt. Der Heizkurvenverlauf ist dadurch gekennzeichnet, daß der Temperaturbereich von 200 bis 300°C innerhalb von 1 h durchfahren wird. Nach 2 h bei 350°C wird sofort gekühlt und entspannt. Nach Abkühlen auf Raumtemperatur wird das entstandene $CrO_2$ mechanisch aus den Reaktionskannen entfernt, getrocknet und gemahlen.

Die Meßergebnisse sind in der Tabelle angegeben.

Beispiel 5

In einem Reaktionsgefäß mit einem Volumen von 2 l werden 500 g $CrO_3$ mit 153,4 g Wasser versetzt und mit Hilfe eines Dissolvers 10 min. dispergiert. Danach werden 21 g $Fe_2O_3$ (= 5,0 Gew.-%, bezogen auf theoretische Ausbeute $CrO_2$) und 0,67 g $TeO_2$ zur Suspension gegeben. Während weiterer 20 min. Rührzeit wird die Mischung bei 60°C mit 23,7 g Glyzerin in 72 ml Wasser und 6,51 g 1-Octanol versetzt.

Das in der beschriebenen Weise erhaltene Reaktionsgemisch wird nach dem Abkühlen in stählerne Reaktionsgefäße mit 5 cm Durchmesser in einem Hochdruckreaktor auf 350°C bei 320 bar aufgeheizt. Der Heizkurvenverlauf ist dadurch gekennzeichnet, daß der Temperaturbereich von 200 bis 300°C innerhalb von 1 h durchfahren wird. Nach 2 h bei 350°C wird sofort gekühlt und entspannt. Nach Abkühlen auf Raumtemperatur wird das entstandene $CrO_2$ mechanisch aus den Reaktionskannen entfernt, getrocknet und gemahlen.

Die Meßergebnisse sind in der Tabelle angegeben.

Beispiel 6

In einem Reaktionsgefäß mit einem Volumen von 2 l werden 500 g $CrO_3$ mit 153,4 g Wasser versetzt und mit Hilfe eines Dissolvers 10 min. dispergiert. Danach werden 21 g $Fe_2O_3$ (= 5,0 Gew.-%, bezogen auf theoretische Ausbeute $CrO_2$) und 0,88 g $TeO_2$ zur Suspension gegeben. Während weiterer 20 min. Rührzeit wird die Mischung bei 60°C mit 23,7 g Glyzerin in 42 ml Wasser und 6,51 g 1-Octanol versetzt.

Das in der beschriebenen Weise erhaltene Reaktionsgemisch wird nach dem Abkühlen in stählerne Reaktionsgefäße mit 5 cm Durchmesser in einem Hochdruckreaktor auf 350°C bei 320 bar aufgeheizt. Der Heizkurvenverlauf ist dadurch gekennzeichnet, daß der Temperaturbereich von 200 bis 300°C innerhalb von 1 h durchfahren wird. Nach 2 h bei 350°C wird sofort gekühlt und entspannt. Nach Abkühlen auf Raumtemperatur wird das entstandene $CrO_2$ mechanisch aus den Reaktionskannen entfernt, getrocknet und gemahlen.

Die Meßergebnisse sind in der Tabelle angegeben.

Beispiel 7

In einem Reaktionsgefäß mit einem Volumen von 2 l werden 500 g $CrO_3$ mit 153,4 g Wasser versetzt und mit Hilfe eines Dissolvers 10 min. dispergiert. Danach werden 21 g $Fe_2O_3$ (= 5,0 Gew.-%, bezogen auf theoretische Ausbeute $CrO_2$) und 0,76 g $TeO_2$ zur Suspension gegeben. Während weiterer 20 min. Rührzeit wird die Mischung bei 60°C mit 23,7 g Glyzerin in 72 ml Wasser und 6,51 g 1-Octanol versetzt.

Das in der beschriebenen Weise erhaltene Reaktionsgemisch wird nach dem Abkühlen in stählerne Reaktionsgefäße mit 5 cm Durchmesser in einem Hochdruckreaktor auf 350°C bei 320 bar aufgeheizt. Der Heizkurvenverlauf ist dadurch gekennzeichnet, daß der Temperaturbereich von 200 bis 300°C innerhalb von 1 h durchfahren wird. Nach 2 h bei 350°C wird sofort gekühlt und entspannt. Nach Abkühlen auf Raumtemperatur

wird das entstandene $CrO_2$ mechanisch aus den Reaktionskannen entfernt, getrocknet und gemahlen.

Die Meßergebnisse sind in der Tabelle angegeben.

Beispiel 8

In einem Reaktionsgefäß mit einem Volumen von 2 l werden 500 g $CrO_3$ mit 154,5 g Wasser versetzt und mit Hilfe eines Dissolvers 10 min. dispergiert. Danach werden 21 g $Fe_2O_3$ (= 5,0 Gew.-%, bezogen auf theoretische Ausbeute $CrO_2$) und 0,55 g $TeO_2$ zur Suspension gegeben. Während weiterer 20 min. Rührzeit wird die Mischung bei 60°C mit 19,8 g Glyzerin in 72 ml Wasser und 8,13 g 1-Octanol versetzt.

Das in der beschriebenen Weise erhaltene Reaktionsgemisch wird nach dem Abkühlen in stählerne Reaktionsgefäße mit 5 cm Durchmesser in einem Hochdruckreaktor auf 330°C bei 225 bar aufgeheizt. Der Heizkurvenverlauf ist dadurch gekennzeichnet, daß der Temperaturbereich von 200 bis 300°C innerhalb von 1 h durchfahren wird. Nach 2 h bei 330°C wird sofort gekühlt und entspannt. Nach Abkühlen auf Raumtemperatur wird das entstandene $CrO_2$ mechanisch aus den Reaktionskannen entfernt, getrocknet und gemahlen.

Die Meßergebnisse sind in der Tabelle angegeben.

Vergleichsversuch 2

In einem Reaktionsgefäß mit einem Volumen von 4 l werden 1000 g $CrO_3$ mit 463,5 g Wasser versetzt und mit Hilfe eines Dissolvers 10 min. dispergiert. Danach werden 30,24 g $Fe_2O_3$ und 1,26 g $TeO_2$ zur Suspension gegeben. Während weiterer 20 min. Rührzeit wird die Mischung bei 70°C mit 32,53 g 1-Octanol versetzt.

Das in der beschriebenen Weise erhaltene Reaktionsgemisch wird nach dem Abkühlen in stählerne Reaktionsgefäße mit 5 cm Durchmesser in einem Hochdruckreaktor auf 350°C bei 320 bar aufgeheizt. Der Heizkurvenverlauf ist dadurch gekennzeichnet, daß der Temperaturbereich von 200 bis 300°C innerhalb von 1 h durchfahren wird. Nach 2 h bei 350°C wird sofort gekühlt und entspannt. Nach Abkühlen auf Raumtemperatur wird das entstandene $CrO_2$ mechanisch aus den Reaktionskannen entfernt, getrocknet und gemahlen.

Die Meßergebnisse sind in der Tabelle angegeben.

Vergleichsversuch 3

In einem Reaktionsgefäß mit einem Volumen von 2 l werden 500 g $CrO_3$ mit 251,2 g Wasser versetzt und mit Hilfe eines Dissolvers 10 min. dispergiert. Danach werden 21 g $Fe_2O_3$ (= 5,0 Gew.-%, bezogen auf theoretische Ausbeute $CrO_2$) und 0,76 g $TeO_2$ zur Suspension gegeben. Während weiterer 20 min. Rührzeit wird die Mischung bei 70°C mit 16,3 g 1-Octanol versetzt.

Das in der beschriebenen Weise erhaltene Reaktionsgemisch wird nach dem Abkühlen in stählerne Reaktionsgefäße mit 5 cm Durchmesser in einem Hochdruckreaktor auf 350°C bei 320 bar aufgeheizt. Der Heizkurvenverlauf ist dadurch gekennzeichnet, daß der Temperaturbereich von 200 bis 300°C innerhalb von 1 h durchfahren wird. Nach 2 h bei 350°C wird sofort gekühlt und entspannt. Nach Abkühlen auf Raumtemperatur wird das entstandene $CrO_2$ mechanisch aus den Reaktionskannen entfernt, getrocknet und gemahlen.

Beispiel B1

In einer 500 Volumenteile fassenden und mit 200 Volumenteilen Stahlkugeln mit einem Durchmesser von 1,5 mm gefüllten Mühle wurden 120 Teile des gemäß Beispiel 1 erhaltenen und mit einer Natriumsulfitlösung nachbehandelten Chromdioxids mit 27 Teilen einer 10 %igen Lösung eines thermoplastischen Polyesterurethans aus Adipinsäure, 1,4-Butandiol, 4,4′-Diisocyanatodiphenylmethan in einem Gemisch aus gleichen Teilen Tetrahydrofuran und Dioxan, 48 Teile einer 50 %igen Lösung eines handelsüblichen Polyvinylformals in einer Mischung aus gleichen Teilen Tetrahydrofuran und Dioxan, 144 Teile eins Lösungsmittelgemisches aus gleichen Teilen Tetrahydrofuran und Dioxan und 2 Teile Zinkstearat gemischt und 4 Stunden dispergiert. Danach wurden nocheinmal die gleichen Mengen der beiden Bindemittellösungen, 13,5 Teile des genannten Lösungsmittelgemisches sowie 0,1 Teile eines handelsüblichen Silikonöls zugefügt und weitere 30 Minuten dispergiert. Anschließend wurde die Dispersion filtriert und auf einer üblichen Beschichtungsmaschine mittels eines Linealgießers auf eine Polyethylenterephthalatfolie in einer solchen Dicke aufgebracht, daß sich nach dem Trocknen und Kalandrieren eine Trockenschichtdicke von 5,5 μm ergab. Unmittelbar nach dem Aufgießen der flüssigen Dispersion wurden die nadelförmigen Chromdioxidteilchen durch ein Magnetfeld längs der Aufzeichnungsrichtung orientiert. Die an den Bandproben gemessenen magnetischen Eigenschaften, die Koerzitivfeldstärke $H_c$ in [kA/m], die remanente Magnetisierung $M_r$ in [mT] sowie der Richtfaktor Rf, das Verhältnis der Remanenz längs zu quer zur Orientierungsrichtung und die Schaltfeldstärkenverteilung SFD nach Williams und Comstock (AIP Conf. Proc. 5 (1971), 738) sind in der Tabelle angegeben.

Außerdem wurde die gemittelte Rauhtiefe $R_z$ der Magnetschicht nach DIN 4768 gemessen. Durch die Messung des Luminanz-Signals bei 4,5 MHz gegen das Bezugsband TDK HD-Pro zu 0 dB wurden die Aufzeichnungseigenschaften bei einer Wellenlänge von 0,7 μm bestimmt.

Die entsprechenden Meßgrößen sind in der Tabelle aufgeführt.

Beispiele B2 - B7 und Vergleichsversuche BV1-BV3

Es wurde wie in Beispiel B1 beschrieben verfahren, jedoch wurden die gemäß den in der Tabelle angegebenen Beispielen erhaltenen Chromdioxidmaterialien eingesetzt. Die Meßergebnisse sind in der Tabelle angegeben.

Tabelle

| | Beispiele | | | | | | | | Vergleichsversuche | | |
|---|---|---|---|---|---|---|---|---|---|---|---|
| | 1 | 2 | 3 | 4 | 5 | 6 | 7 | 8 | 1 | 2 | 3 |
| **Pulver** | | | | | | | | | | | |
| SSA | 32,3 | 30,9 | 31,0 | 32,2 | 32,7 | 34,5 | 31,5 | 30,4 | 29,3 | 32,7 | 32,7 |
| $H_c$ | 62,6 | 61,5 | 72,1 | 62,4 | 62,2 | 62,9 | 64,5 | 67,6 | 69,3 | 63,0 | 64,5 |
| $M_s/\varsigma$ | 91,4 | 90,7 | 85,8 | 91,4 | 91,0 | 90,0 | 88,4 | 89,1 | 92,4 | 87,2 | 84,6 |
| L | 284 | 248 | 286 | 237 | 270 | 267 | 281 | 296 | 322 | 265 | 294 |
| $\Delta L$ | 73 | 83 | 85 | 67 | 81 | 66 | 97 | 82 | 102 | 103 | 108 |
| **Magnetband** | | | | | | | | | | | |
| $H_c$ | 62,8 | 62,2 | 76,7 | 62,2 | 61,2 | 64,9 | 65,1 | 70,2 | 73,6 | 61,1 | 64,8 |
| $M_r$ | 142 | 146 | 122 | 135 | 149 | 141 | 144 | 142 | 134 | 140 | 133 |
| Rf | 3,5 | 3,0 | 2,7 | 2,8 | 3,0 | 3,0 | 3,2 | 2,8 | 3,6 | 2,6 | 3,2 |
| SFD | 0,22 | 0,23 | 0,26 | 0,25 | 0,24 | 0,27 | 0,24 | 0,23 | 0,24 | 0,23 | 0,25 |
| $R_z$ | 0,02 | 0,03 | 0,03 | 0,03 | 0,03 | 0,03 | 0,05 | 0,03 | 0,05 | 0,06 | 0,05 |
| Lu-S | + 4,0 | + 4,5 | + 2,0 | + 2,5 | + 3,0 | + 4,5 | + 3,5 | + 3,0 | + 0,7 | + 0,3 | − 0,5 |
| HD-Faktor | 2,44 | 1,86 | 2,58 | 2,20 | 2,04 | 2,63 | 1,89 | 2,53 | 2,32 | 1,57 | 1,76 |

EP 0 548 642 B1

**Patentansprüche**

1. Magnetischer Aufzeichnungsträger, umfassend ein nichtmagnetisches Trägermaterial und mindestens eine darauf aufgebrachte Magnetschicht, enthaltend ein in einem polymeren Bindemittel und Zusatzstoffen gleichmäßig verteiltes nadelförmiges Chromdioxid mit einer Koerzitivfeldstärke von mindestens 60 kA/m, dadurch gekennzeichnet, daß die mittlere Teilchenlänge des Chromdioxids weniger als 300 nm beträgt und der Faktor HD gemäß der Formel

$$HD = \frac{KT \cdot L}{100 \cdot \Delta L}$$

in der KT die Koerzitivfeldstärke der Magnetschicht in [kA/m], gemessen in einem äußeren Feld von 380 kA/m, L die mittlere Teilchenlänge und $\Delta L$ der Bereich der Teilchengrößenverteilung, bestimmt aus der Anzahl-Verteilung der Teilchenlänge, beides gemessen in [nm], bedeuten, größer 1,85 ist.

2. Magnetischer Aufzeichnungsträger gemäß Anspruch 1, dadurch gekennzeichnet, daß der Faktor HD 1,85 bis 4,0 ist.

3. Verfahren zur Herstellung eines mit Eisen und Tellur und/oder Antimon modifizierten Chromdioxides mit einer Koerzitivfeldstärke von größer 60 kA/m, einer Sättigungsmagnetisierung von größer 85 $nTm^3/g$ und einer engen Teilchengrößenverteilung bei einer mittleren Teilchenlänge von weniger als 300 nm durch Umsetzung einer wäßrigen $CrO_3$-Suspension, versetzt mit 0,05 bis 10 Gew.-% Eisenoxid und Telluroxid und/oder einer Antimonverbindung, bezogen auf Chromdioxid, und organischen Reduktionsmitteln zur Einstellung eines Cr (VI) : Cr(III)-Verhältnisses von 2 : 1 bis 1 : 1, wobei unter Berücksichtigung der bei der Oxidation der organischen Reduktionsmittel entstehenden Wassermenge 1,54 bis 2,32 Gewichtsteile $CrO_3$ auf 1 Teil Wasser eingesetzt werden, bei Temperaturen von 250 bis 400°C unter einem Druck von mindestens 70 bar, dadurch gekennzeichnet, daß als organische Reduktionsmittel Glycerin und Octanol eingesetzt wird, wobei der Anteil des Glycerins am gesamten Reduktionsäquivalent 25 bis 70 % beträgt.

**Claims**

1. A magnetic recording medium comprising a non-magnetic substrate and at least one magnetic layer applied thereon and containing an acicular chromium dioxide uniformly distributed in a polymeric binder and additives and having a coercive force of at least 60 kA/m, wherein the mean particle length of the chromium dioxide is less than 300 nm and the factor HD according to the formula

$$HD = \frac{KT \cdot L}{100 \cdot \Delta L}$$

where KT is the coercive force of the magnetic layer in [kA/m], measured in an external field of 380 kA/m, L is the mean particle length and $\Delta L$ is the range of the particle size distribution, determined from the numerical distribution of the particle length, both measured in [nm], is greater than 1.85.

2. A magnetic recording medium as claimed in claim 1, wherein the factor HD is from 1.85 to 4.0.

3. A process for the preparation of a chromium dioxide which is modified with iron and tellurium and/or antimony and has a coercive force greater than 60 kA/m, a saturation magnetization greater than 85 $nTm^3/g$ and a narrow particle size distribution in conjunction with a mean particle length of less than 300 nm, by reacting an aqueous $CrO_3$ suspension, to which from 0.05 to 10% by weight, based on chromium dioxide, of iron oxide and tellurium oxide and/or an antimony compound have been added, and organic reducing agents for establishing a Cr(VI) : Cr(III) ratio of from 2 : 1 to 1 : 1, from 1.54 to 2.32 parts by weight of $CrO_3$ being used per part of water, taking into account the amount of water formed during the oxidation of the organic reducing agents, at from 250 to 400°C under at least 70 bar, wherein the organic reducing agents used are glycerol and octanol, the amount of glycerol being from 25 to 70% based on the total reduction equivalent.

**Revendications**

1. Supports d'enregistrement magnétique, comprenant un matériau-support non magnétique et au moins une couche magnétique appliquée dessus, contenant un chromate chromeux aciculaire régulièrement réparti dans un liant polymère et des additifs, d'une intensité de champ coercitif d'au moins 60 kA/m, caractérisé par le fait que la longueur moyenne des particules de chromate chromeux est inférieure à 300 nm et le facteur HD selon la formule

$$HD = \frac{KT \cdot L}{100 \cdot \Delta L}$$

dans laquelle KT représente l'intensité de champ coercitif de la couche magnétique en [kA/m], mesurée dans un champ extérieur de 380 kA/m, L représente la longueur moyenne des particules et ΔL la plage de distribution de la grosseur des particules, déterminée par la distribution quantitative de la longueur des particules, les deux étant exprimées en [nm], est supérieur à 1,85.

2. Support d'enregistrement magnétique selon la revendication 1, caractérisé par le fait que le facteur HD est compris entre 1,85 et 4,0.

3. Procédé de préparation d'un chromate chromeux modifié au fer et au tellure et/ou à l'antimoine, d'une intensité d champ coercitif supérieure à 60 kA/m, d'une aimantation de saturation supérieure à 85 $nTm^3/g$ et d'une étroite distribution de la grosseur des particules pour une longueur moyenne des particules inférieure à 300 nm, par réaction, à des températures comprises entre 250 et 400°C, sous une pression d'au moins 70 bars, d'une suspension de $CrO_3$ aqueuse, additionnée de 0,05 à 10% en poids d'oxyde de fer et d'oxyde de tellure et/ou d'un composé d'antimoine, rapportés au chromate chromeux, et d'agents réducteurs organiques, en vue de régler le rapport Cr (VI) / Cr (III) à une valeur comprise entre 2/1 et 1/1, en utilisant, compte tenu de la quantité d'eau formée lors de l'oxydation des agents réducteurs organiques, 1,54 à 2,32 parties en poids de $CrO_3$ par partie d'eau, à des températures comprises entre 250 et 400°C, sous une pression d'au moins 70bars, ce procédé étant caractérisé par le fait que l'on utilise, comme agents réducteurs organiques, du glycérol et de l'octanol, la proportion du glycérol dans l'équivalent de réduction total variant entre 25 et 70%.